# EUROPEAN PATENT APPLICATION

(11) **EP 3 291 270 A1**
(43) Date of publication of application: **07.03.2018**
(21) Application number: 16187177.7
(22) Date of filing: 05.09.2016
(51) Int. Cl.: H01H 36/00, H01H 36/02, G01F 23/62, G01F 23/74

(54) **STRUCTURAL IMPROVEMENT OF LIQUID LEVEL SENSOR HAVING A REED SWITCH**

(71) Applicant: Concraft Holding Co., Ltd., 1-1208 Grand Cayman (KY)
(72) Inventor: WU, Min-Fang, New Taipei City (TW)
(74) Representative: Viering, Jentschura & Partner mbB Patent- und Rechtsanwälte

(57) **Abstract**

A structural improvement of a liquid level sensor (10) includes a pair of terminals (20), a body (30), and a reed switch (40). Each of the terminals (20) has a clamping end (21), a guiding and connecting end (22), an extending portion (23), and a welding end (24). The body (30) covers outer sides of extending portions (23). The pair of terminals (20) are disposed at an interval inside the body (30). The body (30) has a notch (33) and a counterbore (34). The reed switch (40) is clamped on the clamping ends (21) and located at the notch (33).

The clamping ends (21) are respectively disposed on two sides of the notch (33) and protrude from the body (30). The welding ends are exposed in the counterbore (34). The guiding and connecting ends (22) extend outward from a side of the body (30). In this way, positioning of a reed switch (40) is more accurate, production efficiency can be improved, and manufacturing and assembly costs can be lowered.

## Description

### BACKGROUND

### Technical Field

The present invention relates to a structural improvement of a liquid level sensor and in particular, to a liquid level sensor that makes positioning of a reed switch more accurate and that can improve production efficiency and lower manufacturing and assembly costs.

### Related Art

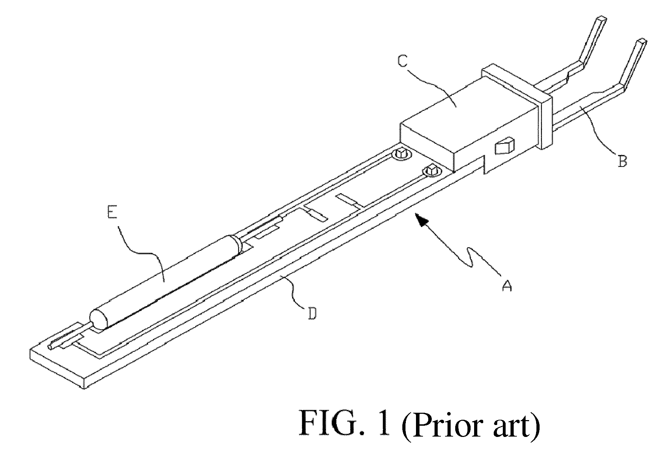

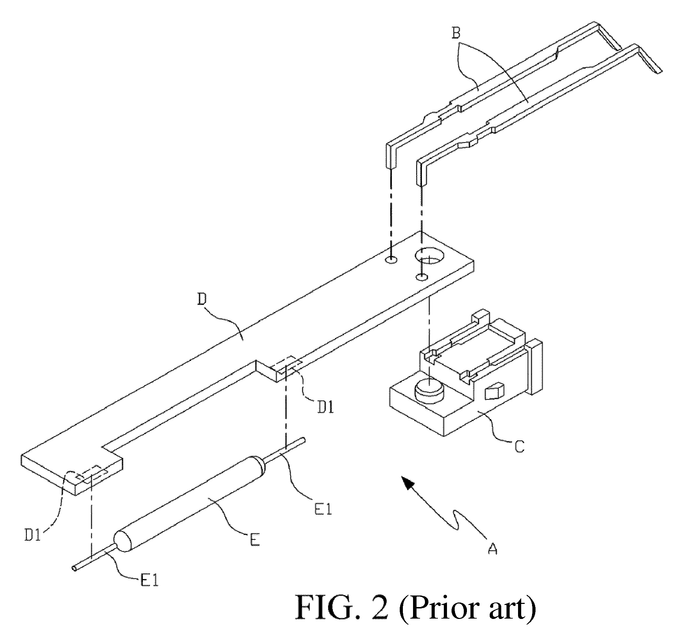

Generally, for use in electronic detection on a liquid level, for example, measurement on a water level or a fuel level, mainly, a reed switch is used as a main detection component to assembly a liquid level sensor, and a current liquid level sensor is shown in FIG. 1 and FIG. 2.

A current liquid level sensor A consists of a pair of terminals B, a body C, a circuit board D, and a reed switch E. When the liquid level sensor A is assembled, the pair of terminals B are welded to the circuit board D, then the circuit board D and the terminals B are assembled on the body C, and finally, the reed switch E is assembled on the circuit board D.

As described above, the current liquid level sensor A is constituted by many pieces and during assembly, it is easy to cause an assembly tolerance, thereby affecting accuracy of the liquid level sensor A. In addition, assembly of the reed switch E and the circuit board D is directly placing guiding and connecting rods E1 located on two sides of the reed switch E on corresponding welding spots D1 on the circuit board D and then welding the reed switch E to the circuit board D. Such an assembly manner requires using a special fixture to perform positioning, and otherwise, it is easy to cause displacement of the reed switch E.

Further, the terminals B also need to be welded on the circuit board D and then be assembled on the body C, and it is easy to generate a tolerance of assembly between the terminals B and the body C. In this way, production efficiency of the liquid level sensor A is low, and because of the components, there are many assembly procedures, which bring a lot of costs.

In view of the above, to make an improvement and solve the foregoing disadvantages, the present inventor devotes oneself to researches, applies theories, and finally proposes a liquid level sensor that is properly designed and that effectively alleviates the foregoing disadvantages.

### SUMMARY

A main objective of the present invention is to provide a structural improvement of a liquid level sensor and in particular, to provide a liquid level sensor that makes positioning of a reed switch more accurate and that can improve production efficiency and lower manufacturing and assembly costs.

To achieve the foregoing objective, the present invention provides a structural improvement of a liquid level sensor including a pair of terminals, a body, and a reed switch. Each of the terminals has a clamping end, a guiding and connecting end, an extending portion, and a welding end. The body covers outer sides of extending portions of the pair of terminals so that the pair of terminals are disposed at an interval inside the body. A side of the body has a notch and the body has a counterbore. The reed switch is clamped on the clamping ends of the pair of terminals and located at the notch of the body.

The clamping ends of the pair of terminals are respectively disposed on two sides of the notch of the body and protrude from the body; the welding ends of the pair of terminals are exposed in the counterbore of the body. The guiding and connecting ends of the pair of terminals extend outward from a side of the body.

In this way, positioning of a reed switch is more accurate, production efficiency can be improved, and manufacturing and assembly costs can be lowered.

### BRIEF DESCRIPTION OF THE DRAWINGS

The present invention will become more fully understood from the detailed description given herein below for illustration only, and thus are not limitative of the present invention, and wherein:
FIG. 1 is a schematic perspective view of a conventional liquid level sensor;
FIG. 2 is a schematic exploded perspective view of a conventional liquid level sensor;
FIG. 3 is a schematic perspective view of the present invention;
FIG. 4 is a schematic exploded perspective view of a part of the present invention; and
FIG. 5 is a schematic exploded perspective view of a detail of the present invention.

### DETAILED DESCRIPTION

To further disclose features and technical content of the present invention, reference may be made to detailed descriptions on and accompanying drawings of the present invention. However, the accompanying drawings are merely provided for reference and description, but not intended to limit the present invention.

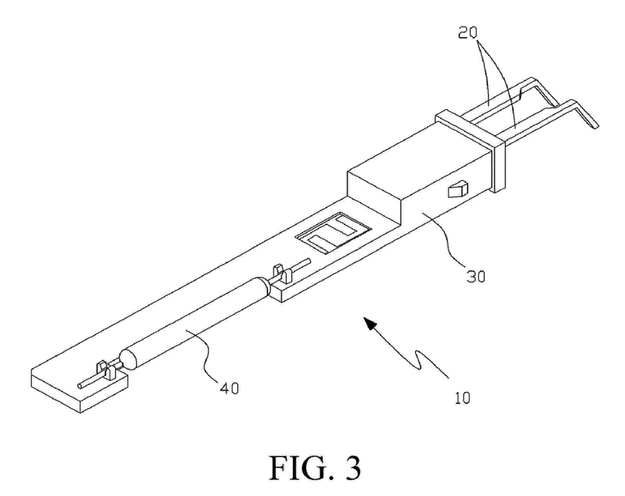

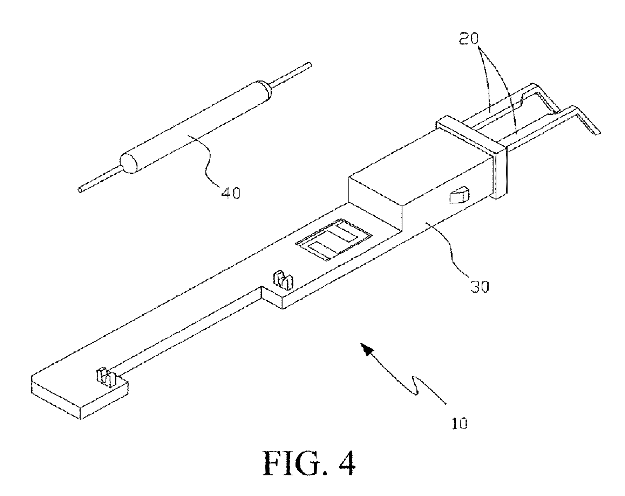

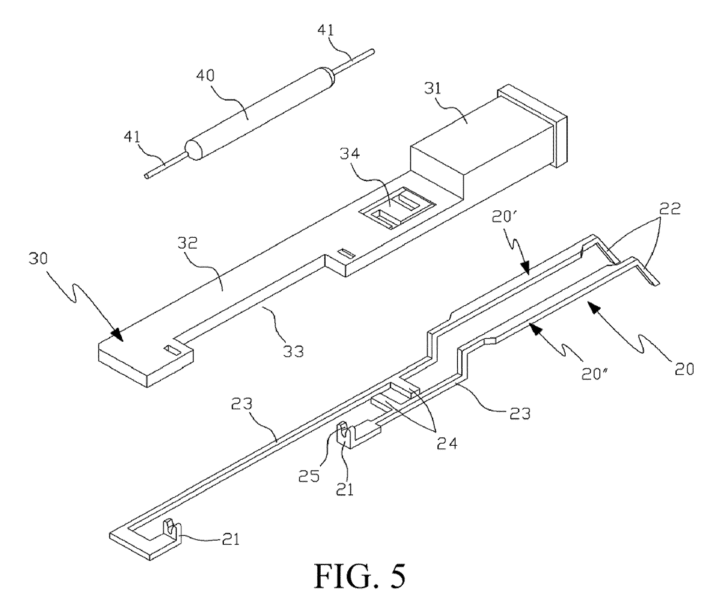

As shown in FIG. 3 to FIG. 5, the present invention provides a structural improvement of a liquid level sensor, where the liquid level sensor 10 includes a pair of terminals 20, a body 30, and a reed switch 40.

The pair of terminals 20 include a first terminal 20' and a second terminal 20". The first terminal 20' and the second terminal 20" are electrically separated from each other. Each of the terminals 20 has a clamping end 21, a guiding and connecting end 22, a extending portion 23 that connects the clamping end 21 and the guiding and connecting end 22, and a welding end 24 that extends outward from a side of the extending portion 23. The welding ends on the first terminal 20' and the second terminal 20" respectively extend toward each other. The clamping end 21 and guiding and connecting end 22 of each of the terminals 20 are formed by extending in directions opposite to each other. The clamping end 21 of each of the terminals 20 has a clamping groove 25.

A body 30 has a body portion 31 and a positioning portion 32, the positioning portion 32 extends outward from a side of the body portion 30, there is a segment difference between the body portion 31 and the positioning portion 32, and the positioning portion 32 has a notch 33 and a counterbore 34.

When the present invention is carried out, the pair of terminals 20 are formed of a metal tape feeder in a punching manner, then the punched metal tape feeder is placed into a mold, and subsequently, the body 30 is formed on the pair of terminals 20 in an injection molding manner, so as to integrally form the pair of terminals 20 and the body 30, thereby preventing an assembly tolerance between the terminal 20 and body 30.

When the body 30 is formed on the pair of terminals 20 in an injection molding manner, the body 30 covers outer sides of the extending portions 23 of the pair of terminals 20, the clamping ends 21 of the pair of terminals 20 are located on two sides of the notch 33 on the positioning portion 32 of the body 30, and the clamping ends 21 and the extension of the notch 33 are disposed perpendicular to each other and protrude out of the positioning portions 32. In addition, the welding ends 24 of the pair of terminals 20 are exposed in a protruding manner inside the counterbore 34 on the positioning portion 32 and can be configured to dispose an electronic piece (which is not represented by a reference sign, for example, a resistor). The guiding and connecting ends 22 of the pair of terminals 20 extend outward in a direction opposite to the positioning portions 32 from the body portion 31 located on the body 30 to extend out of an outer side of the body portion 31.

Each of the two sides of the reed switch 40 has a guiding and connecting rod 41, the reed switch 40 is clamped inside the clamping grooves 25 on the clamping ends 21 of the pair of terminals 20 by means of the guiding and connecting rods 41, so that the reed switch 40 is held between the clamping ends 21 of the pair of terminals 20 and is located at the position of the notch 33 of the body 30.

In this way, in the liquid level sensor 10 of the present invention, the pair of terminals 20 thereof and the body 30 thereof are integrally formed. Therefore, assembly personnel only need to clamp the reed switch 40 between the clamping ends 21 of the pair of terminals 20 and then perform welding, so as to complete assembly of the liquid level sensor 10 of the present invention.

As compared with the conventional technology, the liquid level sensor 10 of the present invention has fewer components and has characteristics such as convenient assembly, low costs, and a small assembly tolerance.

While the present invention has been described by way of example and in terms of the preferred embodiments, it is to be understood that the present invention needs not be limited to the disclosed embodiments. For anyone skilled in the art, various modifications and improvements within the spirit of the present invention are covered under the scope of the instant disclosure. The covered scope of the present invention is based on the appended claims.

## Claims

1. A structural improvement of a liquid level sensor (10), comprising:
a pair of terminals (20), wherein each of the terminals has a clamping end (21), a guiding and connecting end (22), an extending portion (23) that connects the clamping end (21) and the guiding and connecting end (22), and a welding end (24) extending from a side of the extending portion (23);
a body (30), covering outer sides of extending portions (23) of the pair of terminals (20), wherein the pair of terminals (20) are disposed at an interval inside the body, a side of the body has a notch (33), and the body has a counterbore (34); and
a reed switch (40), clamped on the clamping ends (21) of the pair of terminals and located at the notch (33) of the body (30);
wherein, the clamping ends (21) of the pair of terminals (20) are respectively disposed on two sides of the notch (33) of the body (30) and protrude from the body (30); the welding ends (24) of the pair of terminals (20) are exposed in the counterbore (34) of the body (30); and the guiding and connecting ends (22) of the pair of terminals (20) extend outward from a side of the body (30).

2. The structural improvement of a liquid level sensor according to claim 1, wherein the clamping ends (21) and guiding and connecting ends (22) of the pair of terminals (20) extend in different directions along the extending portion (23).

3. The structural improvement of a liquid level sensor according to claim 1, wherein the body (30) is integrally formed in an injection molding manner and covers the outer sides of the extending portions (23) of the pair of terminals (20).

4. The structural improvement of a liquid level sensor according to claim 1, wherein the clamping end (21) of each of the terminals (20) further has a clamping groove (25), two sides of the reed switch (40) further respectively extend outward to be each provided with a guiding and connecting rod (41), and the guiding and connecting rods (41) on the two sides of the reed switch (40) are respectively clamped in the clamping groove (25) of each of the terminals (20).

5. The structural improvement of a liquid level sensor according to claim 1, wherein the clamping end (21) of each of the terminals (20) is disposed perpendicular to the body (30).

6. The structural improvement of a liquid level sensor according to claim 1, wherein the body (30) further has a body portion (31) and a positioning portion (32), the positioning portion (32) extends outward from a side of the body portion (31), and there is a segment difference between the body portion (31) and the positioning portion (32).

7. The structural improvement of a liquid level sensor according to claim 6, wherein the notch (33) and the counterbore (34) are located on the positioning portion (32).

8. The structural improvement of a liquid level sensor according to claim 6, wherein the guiding and connecting ends (22) of the terminals (20) extend outward in a direction opposite to the positioning portion (32) from the body portion.

## Amended claims

### Amended claims in accordance with Rule 137(2) EPC.

1. A liquid level sensor (10), comprising a pair of terminals (20), a body (30), and a reed switch (40), characterized that:
the pair of terminals (20), wherein each of the terminals has a clamping end (21), a guiding and connecting end (22), an extending portion (23) that connects the clamping end (21) and the guiding and connecting end (22), and a welding end (24) extending from a side of the extending portion (23), wherein each of the terminals is electrically separated from each other;
the body (30), covering outer sides of extending portions (23) of the pair of terminals (20), wherein the pair of terminals (20) are disposed at an interval inside the body, a side of the body has a notch (33), and the body has a counterbore (34); and
the reed switch (40), clamped on the clamping ends (21) of the pair of terminals and located corresponding to the notch (33) of the body (30), and wherein the reed switch (40) is located at a horizontal level different from the body (30);
wherein, the clamping ends (21) of the pair of terminals (20) are respectively disposed on two sides of the notch (33) of the body (30) and protrude from the body (30); the welding ends (24) of the pair of terminals (20) are exposed in the counterbore (34) of the body (30); and the guiding and connecting ends (22) of the pair of terminals (20) extend outward from a side of the body (30).

2. The liquid level sensor according to claim 1, wherein the clamping ends (21) and guiding and connecting ends (22) of the pair of terminals (20) extend in different directions along the extending portion (23).

3. The liquid level sensor according to claim 1, wherein the body (30) is integrally formed in an injection molding manner and covers the outer sides of the extending portions (23) of the pair of terminals (20).

4. The liquid level sensor according to claim 1, wherein the clamping end (21) of each of the terminals (20) further has a clamping groove (25), two sides of the reed switch (40) further respectively extend outward to be each provided with a guiding and connecting rod (41), and the guiding and connecting rods (41) on the two sides of the reed switch (40) are respectively clamped in the clamping groove (25) of each of the terminals (20).

5. The liquid level sensor according to claim 1, wherein the clamping end (21) of each of the terminals (20) is disposed perpendicular to the body (30).

6. The liquid level sensor according to claim 1, wherein the body (30) further has a body portion (31) and a positioning portion (32), the positioning portion (32) extends outward from a side of the body portion (31), and there is a segment difference between the body portion (31) and the positioning portion (32).

7. The liquid level sensor according to claim 6, wherein the notch (33) and the counterbore (34) are located on the positioning portion (32).

8. The liquid level sensor according to claim 6, wherein the guiding and connecting ends (22) of the terminals (20) extend outward in a direction opposite to the positioning portion (32) from the body portion.
